# EUROPÄISCHE PATENTSCHRIFT

(11) **EP 2 112 396 B1**
(45) Veröffentlichungstag und Bekanntmachung des Hinweises auf die Patenterteilung: **02.05.2012**
(21) Anmeldenummer: 09005674.8
(22) Anmeldetag: 22.04.2009
(51) Int. Cl.: F16D 65/04, F16D 69/04

(54) **Brems- und/oder Klemmvorrichtung für Wellen und Führungsschienen**
Braking and/or clamping device for shafts and guide rails
Dispositif de freinage et/ou de serrage pour arbres et rails de guidage

(30) Priorität: 23.04.2008 DE 102008020519
(43) Veröffentlichungstag der Anmeldung: 28.10.2009
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- WO-A-2006/108387
- DE-U1- 20 002 915
- DE-U1- 20 202 803
- US-A- 3 995 534
- US-A1- 2005 183 907

## Beschreibung

Die Erfindung betrifft eine Brems- und/oder Klemmvorrichtung zum Bremsen oder Klemmen einer Führungsschiene und/oder Welle gegenüber einem Gehäuse, wobei die Vorrichtung mindestens drei über ein Schiebekeilgetriebe betätigbare Reibgehemme umfasst, wobei das einzelne Schiebekeilgetriebe zur Belastung des Reibgehemmes mittels Federkraft und/oder Druckluftkraft in eine Richtung und zur Entlastung mittels Druckkraft in die entgegengesetzte Richtung bewegt wird. Das Schiebekeilgetriebe weist einen Kolben einer Zylinder-Kolben-Einheit auf, dessen Kolben oder dessen Kolbenstange mindestens eine Schiebekeilflanke hat.

Die WO 2006/108387 Al betrifft eine Brems- und/oder Klemmvorrichtung nach dem Oberbegriff des Anspruchs 1. Die Führungsschiene und/oder Welle wird von einer mehrfach geschlitzten Hülse umgeben. Teile der Hülse bilden die beim Bremsen an der Welle anliegenden Klemmelemente. Die Klemmelemente weisen Taschen auf, in denen innere Keile sitzen. Auf diese inneren Keile wirken längsverschiebbar angetriebene Keile. Letztere stützen sich an ortsfesten Führungsklötzen ab. Die verschiebbaren Keile kontaktieren die Führungsklötze und die inneren Keile über Nadelkäfige. Die verschiebbaren Keile liegen in Einkeilrichtung an einer federbelasteten Ringplatte an. An ihren anderen freien Enden berühren die Keile einen Ringkolben einer pneumatischen Zylinder-Kolben-Einheit.

Aus der DE 102 07 605 Cl ist eine derartige Brems- und/oder Klemmvorrichtung bekannt. Bei dieser Vorrichtung wirken zwei Schiebekeilgetriebe auf eine festzuklemmende Führungsschiene. Die Schiebekeilgetriebe werden über Federelemente belastet und durch mehrere Zylinder-Kolben-Einheiten entlastet. Dabei liegen die Federelemente an den Böden zweier Kolben an.

Der vorliegenden Erfindung liegt die Problemstellung zugrunde, eine Brems- und/oder Klemmvorrichtung zu entwickeln, die bei großer Klemmkraft einen geringen Bauraumbedarf hat. Zudem soll sie bei wartungsarmer, einfacher und sicherer Handhabung die Brems- und Klemmkräfte reaktionsschnell und nahezu verschleiß frei freisetzen, ohne die am Bremsen und/oder Klemmen beteiligte Führungsschiene oder Welle abrasiv zu schädigen.

Diese Problemstellung wird mit den Merkmalen des Anspruchs 1 gelöst. Dazu sind der Kolben und die Kolbenstange aus einem Stück gefertigt. Die Kombination aus dem Kolben und aus der Kolbenstange weist eine zusammenhängende Ausnehmung mit einem planen Bohrungsgrund auf. Zentral auf dem Bohrungsgrund der Ausnehmung ist ein Führungszapfen angeordnet. In der Ausnehmung ist mindestens ein Federelement oder ein System aus Federelementen angeordnet.

Die einzelne Brems- und/oder Klemmvorrichtung umfasst z.B. mehrere, im Kreis um eine zu bremsende und/oder zu klemmende Welle angeordnete Reibgehemme. Jedes Reibgehemme wird mittels Federkraft und/oder Druckluftkraft betätigt und zumindest mittels Druckluftkraft entlastet. Die Feder- und die Druckluftkräfte werden jeweils mit Hilfe eines z.B. ebenen Schiebekeilgetriebes zu Klemmkräften verstärkt. Jedes Reibgehemme hat ein sich am Gehäuse und/oder Grundkörper spielfrei abstützendes Reibelement, das während des Bremsens und/oder Klemmens in einen direkten Kontakt mit der Welle kommt.

Um besonders hohe Brems- oder Klemmkräfte zu erzeugen, können die Reibgehemme auch zwei- oder mehrreihig hintereinander in einem Gehäuse untergebracht werden.

In einem anderen Ausführungsbeispiel wirkt das Reibgehemme auf eine Führungsschiene, auf der ein Maschinen- oder ein Messgeräteschlitten gelagert und geführt ist, der diese Vorrichtung trägt. Das einzelne Reibgehemme entwickelt auch hier seine Brems- und Klemmwirkung durch das Freisetzen von in einem Federspeicher gespeicherten Federenergie, die über das Schiebekeilgetriebe auf die Reibbacke übertragen wird.

Die Führungsschienen, an denen die Reibbacken zur Anlage kommen, können z.B. prismatische, rechteckförmige, runde, ovale oder polygonförmige Querschnitte haben. Auch ist die Reibpaarung nicht auf Linearführungen begrenzt. Anstelle der erwähnten Führungsschienen können im Raum gekrümmte Schienen verwendet werden.

Die für die Entlastung des oder der Schiebekeilgetriebe benutzten pneumatischen Kolben haben Ausnehmungen, in denen die für die Klemmkrafterzeugung und die Klemmkrafterhaltung erforderlichen Federelemente oder Federsysteme angeordnet sind. Dadurch verkürzt sich der Bauraumbedarf der Vorrichtung längs der Richtung der die Schiebekeilgetriebe be- und entlastenden Antriebskräfte in besonderem Maße.

Die nur beispielhaft erwähnten pneumatischen Antriebe der Zylinder-Kolben-Einheiten können auch durch hydraulische Antriebe ersetzt werden.

weitere Einzelheiten der Erfindung ergeben sich aus den Unteransprüchen. Es folgen Beschreibungen schematisch dargestellter Ausführungsbeispiele.
- Figur 1:: Perspektivische Ansicht einer Brems- und/oder Klemmvorrichtung mit mehreren Reibgehemmen;
- Figur 2:: Teilquerschnitt C-C zu Figur 1 und 4;
- Figur 3:: Längsschnitt D-D durch die Reibgehemme, rechte Figurenseite: unbelastetes Reibgehemme, linke Fi- gurenseite: belastetes Reibgehemme;
- Figur 4:: Längsschnitt A-A durch die Druckluftanschlüsse;
- Figur 5:: Reibelement;
- Figur 6:: Pneumatikkolben nach Figur 3;
- Figur 7:: Pneumatikkolben nach Figur 3, jedoch andere Ansicht;
- Figur 8:: Reibgehemme mit gestecktem Reibelement;
- Figur 9:: Reibgehemme mit angeformtem Reibelement;
- Figur 10:: Reibgehemme mit hinterdrehtem Reibelement;
- Figur 11:: Seitenansicht zu Figur 10;
- Figur 12:: Brems- und/oder Klemmvorrichtung für eine Führungs- schiene, gegenüber Figur 3 vergrößert.

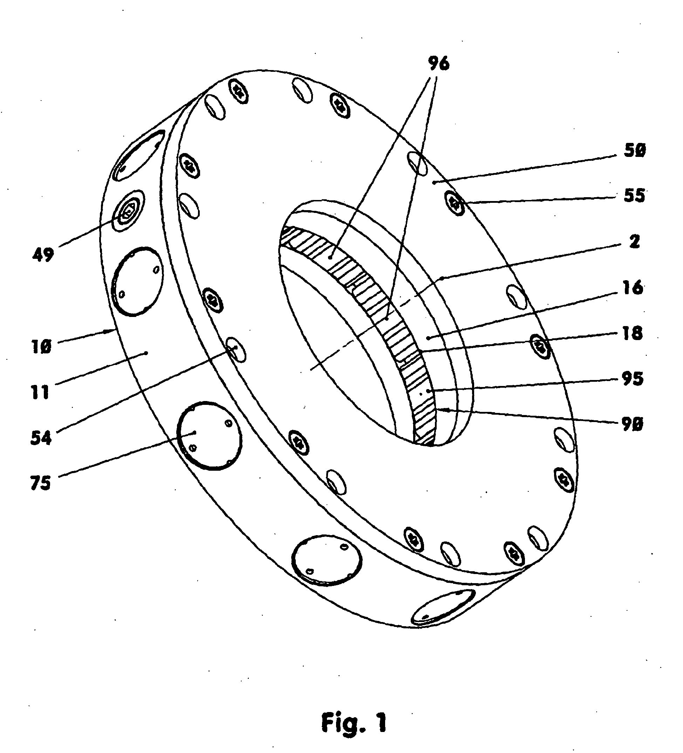

Die Figuren 1 bis 4 zeigen eine Brems- und/oder Klemmvorrichtung, wie sie beispielsweise zum Klemmen von in Werkzeug-und/oder Messmaschinen eingesetzten Wellen verwendet werden. Die Vorrichtung der vorliegenden Ausführungsform ist hierbei am entsprechenden Maschinenteil (5) so angeordnet, dass sie die festzuklemmende Welle (1) in der Regel mit mehr als drei Reibgehemmen (60) umgreift. An der Welle (1) liegen beim Klemmen von den Reibgehemmen (60) bewegte Reibelemente (90-93). Jedes einzelne Reibelement (90-93) hat eine Reibzone (95). Die Flächenschwerpunkte (96) der Reibzonen (95) liegen z.B. in einer Ebene, die normal zur Mittellinie (2) der Welle (1) orientiert ist.

Das Gehäuse (10) besteht im Wesentlichen aus einem Grundkörper (11) und einem Deckel (50). Es hat im Ausführungsbeispiel einen Durchmesser von 185 mm und eine Bauhöhe von 35 mm. Nach den Figuren 1 bis 4 ist der Grundkörper (11) ein ringförmiges Bauteil mit einer zentralen Bohrung (15), die die Welle (1), deren Durchmesser hier 90 mm beträgt, umgibt. In den Grundkörper (11) sind 10 radial zu dessen Mittellinie (2) ausgerichtete Stufenbohrungen (25) von außen her eingearbeitet. Die Stufenbohrungen (25) enden in einer Ringnut (18) der Bohrung (15). Die Ringnut (18) hat normal zur Mittellinie (2) ausgerichtete Seitenwandungen. Ihre Grundfläche ist zylindrisch. Jede einzelne zur Mittellinie (2) parallele Sacklochbohrung (27) wird durch eine radiale Stufenbohrung (25) geschnitten.

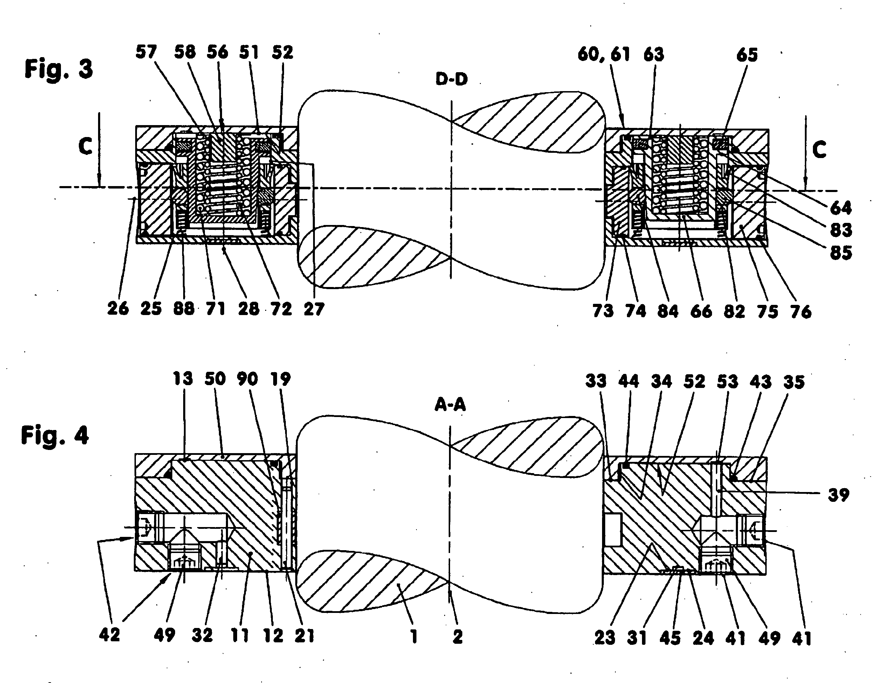

Der Grundkörper (11) hat eine Unterseite (12), in die ein flacher, breiter Ringkanal (23) eingedreht ist. Im Grund (24) des Ringkanals (23), der parallel zur Unterseite (12) orientiert ist, ist ein schmaler Luftführkanal (31) eingearbeitet. Letzterer schneidet die Sacklochbohrungen (27). In den Ringkanal (23) ist eine Ringscheibe (45) zum gasdichten Abdecken des Luftführkanals (31) eingeklebt, vgl. Figuren 3 und 4.

Die Oberseite (13) des Grundkörpers (11) weist, sowohl nach innen als auch nach außen versetzt, beidseits der Sacklochbohrungen (27) je einen Gehäusebund (33, 35) auf. Der innere Gehäusebund (33) trägt ein Gewinde (34), z.B. ein Feingewinde M 100x1. Zwischen dem Gehäusebund (33) und den Sacklochbohrungen (27) befindet sich ein Ringkanal zur Aufnahme eines Dichtungsrings (44). Beide Gehäusebünde (33, 35) haben z.B. die gleiche Höhe.

In den Wandungen der Ringnut (18), die normal zur Mittellinie (2) orientiert sind, befinden sich pro Reibgehemme (60) zwei Durchgangsbohrungen (19), die die Stirnfläche des inneren Gehäusebundes (33) und die Unterseite (12) des Grundkörpers (11) miteinander verbinden. Beide Durchgangsbohrungen (19) sitzen seitlich neben der entsprechenden Stufenbohrung (25).

Im Bereich des äußeren Gehäusebundes (35) sind 10 Gewindebohrungen (36) für die Verschraubung des Deckels (50) angeordnet. Die Gewindebohrungen (36) sitzen versetzt zu den Stufenbohrungen (25). Neben jeder Gewindebohrung (36) sitzt z.B. auf dem gleichen Lochkreis eine Durchgangsbohrung (37), die in der Unterseite (12) des Grundkörpers (11) in einer Stufensenkung endet.

Auf der Oberseite (13) des Grundkörpers (11) sitzt der Deckel (50), der zumindest auf dem äußeren Gehäusebund (35) aufliegt. Dazu hat der Deckel (50) eine ringförmige Eindrehung (51), deren Bodenfläche (52) gegenüber den Öffnungen der Sacklochbohrungen (27) liegt. In der Bodenfläche (52) der Eindrehung (51) befindet sich ein schmaler Luftführkanal (53), der die Sacklochbohrungen (27) miteinander pneumatisch verbindet. Die innere zylindrische Wandung der Eindrehung (51) ist mit einem Feingewinde ausgestattet. Im Bereich des äußeren Gehäusebundes (35) hat der Deckel eine 45°-Fase, um dort einen Dichtring (43) in der Hohlkehle des Gehäusebundes (35) gasdicht einzuklemmen.

Um den oberen Luftführkanal (53) mit Druckluft zu versorgen oder entlüften zu können, ist dieser über eine Bohrung (39), vgl. Figur 4, mit einem zweifachen Luftanschluss (41) verbunden. Auch der untere Luftführkanal (31) steht über eine Bohrung (32) mit einem zweifachen Luftanschluss (42) in Verbindung. Beide Luftanschlüsse (41, 42) enden sowohl in der Unterseite (12) als auch in der radialen Außenwandung (14) des Grundkörpers (11). Jeweils mindestens einer ist durch einen Stopfen (49) verschlossen.

Am Rand des Deckels (50) befinden sich im Bereich des äußeren Gehäusebundes (35) 20 Durchgangsbohrungen (54) mit Stufensenkungen. Jeweils 10 fluchten mit den Gewindebohrungen (36), die anderen 10 mit den Durchgangsbohrungen (37) des Grundkörpers (11).

Zur Montage des Deckels (50) wird dieser zunächst über das Feingewinde (34) auf den Grundkörper (11) geschraubt, bis der Deckel (50) auf dem inneren Gehäusebund (33) aufliegt. Dann wird der Deckel (50) so weit zurückgedreht, bis das Lochbild des Deckels (50) auf das Lochbild der Gewindebohrungen (36) passt. Der Schwenkwinkel der Zurückdrehung ist kleiner als 36 Winkelgrade. Abschließend wird der Deckel (50) mittels der Schrauben (55) mit dem Grundkörper (11) verschraubt.

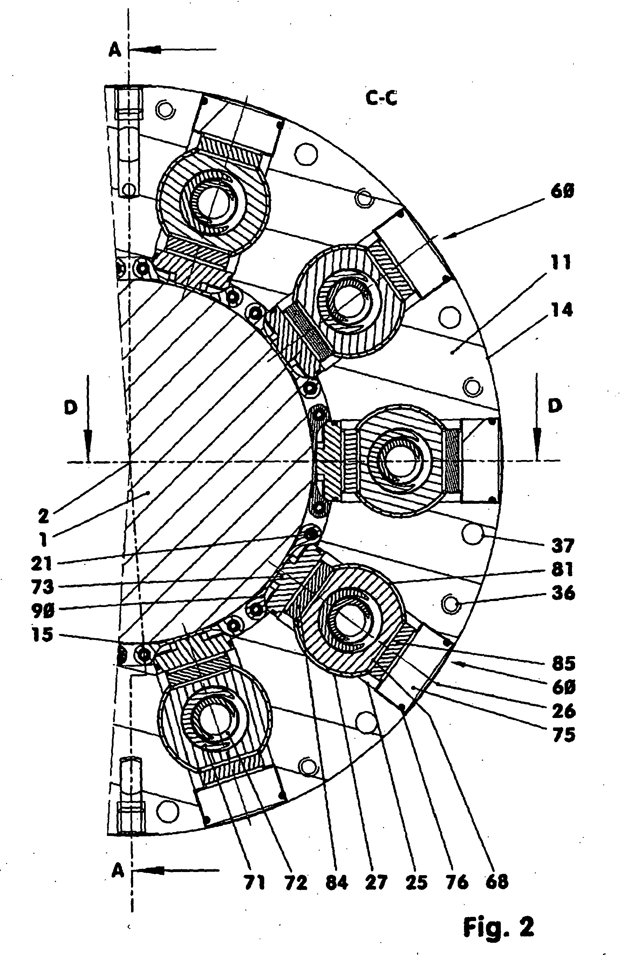

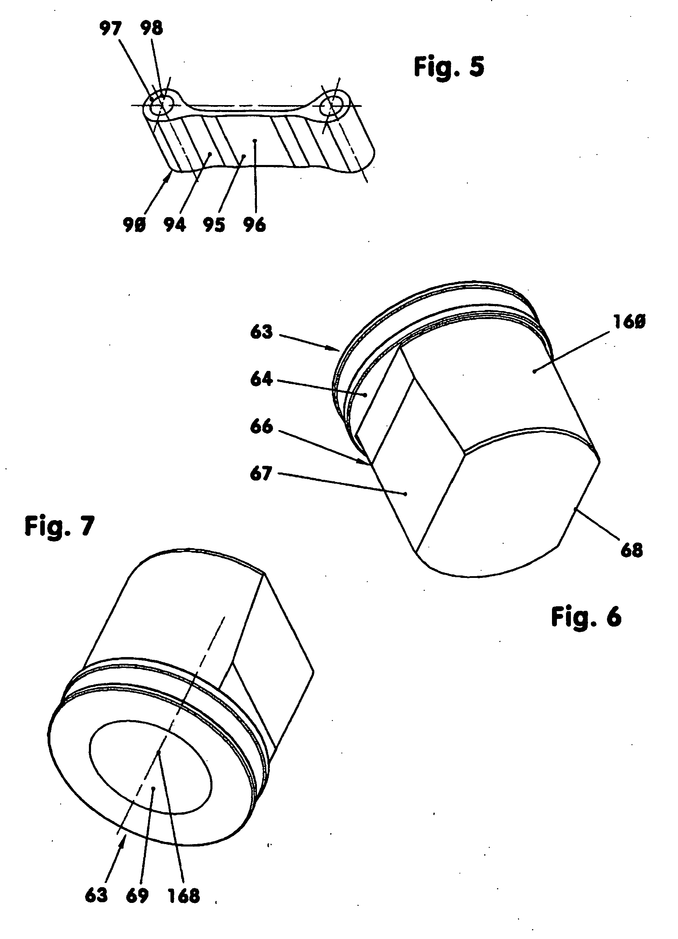

In der Ringnut (18) des Grundkörpers (11) ist pro Reibgehemme (60) ein Reibelement (90), vgl. Figur 5 und 2, angeordnet. Das einzelne Reibelement (90) ist ein flaches, elastisches Biegeelement (94), an dem beidseits je ein Befestigungsauge (97) angeordnet ist. Jedes Befestigungsauge (97) weist eine Bohrung (98) auf. Das Biegeelement (94) ist gegenüber einer Ebene, die durch die beiden Mittellinien der Bohrungen (98) gebildet wird, zur Welle (1) hin z.B. um 2,3 mm versetzt. Das Biegeelement (94) hat hier ein mittlere Wandstärke von 1,4 mm. Der Bereich, der beim Klemmen an der Welle (1) anliegt, ist die Reibzone (95). Sie ist im Ausführungsbeispiel nach Figur 1, 2 und 5 ein Teil einer Zylindermantelfläche. Ggf. ist das Biegeelement (94) im Bereich der Reibzone (95) formsteif ausgebildet, während es zwischen der Reibzone (95) und den Befestigungsaugen (97) besonders biegeweich gestaltet ist. Die Reibzone (95) ist beispielsweise mit einem Reibbelag aus einem pulvermetallurgisch hergestellten Reibwerkstoff auf Bronzebasis beschichtet. Der Reibwerkstoff enthält ggf. zusätzlich keramische Bestandteile. Alternativ kann der Reibbelag am Reibelement (90-93) auch verklebt oder verlötet sein.

Die Breite des einzelne Reibelements (90) - gemessen parallel zur Mittellinie (2) - ist so gewählt, dass es mit geringem Spiel zwischen die seitlichen Flanken der Ringnut (18) passt. Es wird nach Figur 2 in der Ringnut (18) mittels Federstiften (21) gehalten. Die Federstifte (21) durchqueren jeweils die Bohrungen (19) und (98). Anstelle der Federstifte (21) können auch Kerbstifte oder Zylinderstifte verwendet werden. Nach der Montage berühren die unbelasteten Reibelemente (90) nicht die Welle (1). Zwischen der Welle (1) und der Reibzone (95) liegt ein Lüftabstand von 0,02 bis 0,3 mm.

Das zweifach abgestützte Reibelement (90) sitzt zumindest in Umfangsrichtung spielfrei im Grundkörper (11). Die Welle (1) wird beim Klemmen gegenüber dem Gehäuse (10) unabhängig vom Drehsinn des zu haltenden Drehmoments blockiert.

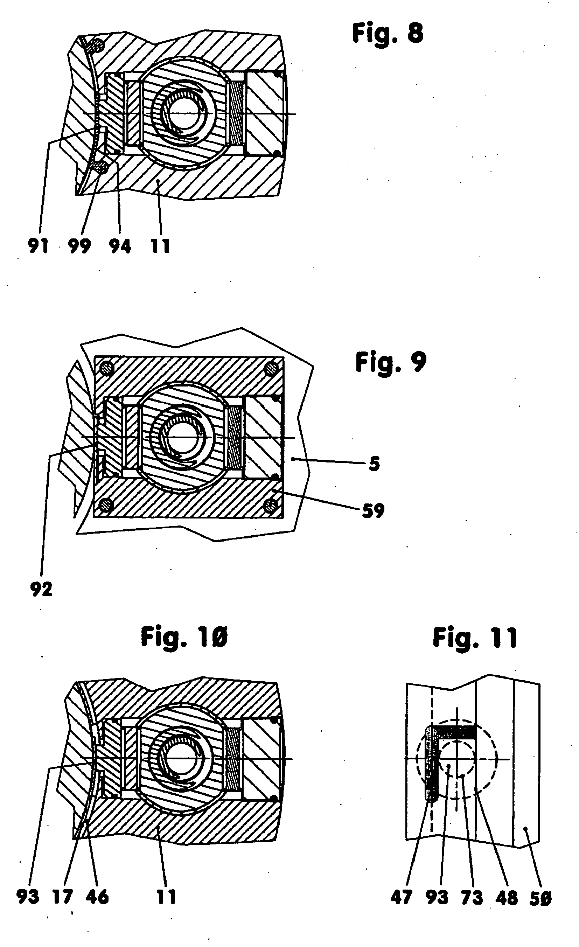

In Figur 8 wird ein ein- bzw. halbseitig im Grundkörper (11) gelagertes Reibelement (91) gezeigt, dessen Biegeelement (94) im Befestigungsbereich um z.B. 90 Winkelgrade abgewinkelt ist und in einem angeformten Bolzen (99) endet. Der Bolzen (99) ist in eine gehäuseseitige Bohrung eingepresst. Ggf. hat die Hälfte der pro Gehäuse (10) verwendeten Reibelemente (91) die in Figur 8 dargestellte Form, während die andere Hälfe eine Form hat, die zu dieser spiegelsymmetrisch aufgebaut ist. Die Symmetrieebene ist hierbei eine Ebene, die durch die sich schneidenden Mittellinien (2) und (26) gebildet wird.

Figur 9 zeigt ein Reibgehemme, bei der das Reibelement (92) ein Teil des Grundkörpers (11, 59) ist. Der Spalt zwischen dem Grundkörper (11, 59) und dem Reibelement (92) wird beispielsweise durch Drahterodieren herausgearbeitet. Das Reibelement (92) hat hier z.B. die Form einer ebenen Platte.

Diese Figur zeigt zudem ein Reibgehemme, das in einem quaderförmigen Grundkörper (59) untergebracht ist. Aus mindestens drei z.B. sternförmig um eine Welle (1) formsteif platzierten Reibgehemmen entsteht - nach einer pneumatischen Verbindung über Druckluftleitungen - eine Brems und/oder Klemmvorrichtung.

Die Figuren 10 und 11 zeigen eine weitere Alternative, bei der der Grundkörper (11) und die Reibelemente (93) aus einem Teil gefertigt sind. Hierzu wird hier - von der Oberseite (13) aus - am Grundkörper (11) ein Absatz (48) abgedreht, um dann einen Ringkanal (46) ab dem Absatz (48) einzustechen, der gegenüber der Bohrungswandung (16) einen schmalen Steg (17) stehen lässt. Die Stegbreite entspricht hierbei der Wandstärke des Reibelements (93). Abschließend wird von der Bohrung (15) aus die in Figur 11 grau dargestellte Fläche herausgefräst, so dass ein freischwingendes Reibelement (93) entsteht, das die Form eines Ausschnitts eines Zylindermantels hat. Der untere Teil des herausgefrästen Teils schneidet den Grund (47) des Ringkanals (46).

In jedem Hohlraum zweier sich schneidender Stufen- (25) und Sacklochbohrungen (27) ist ein Reibgehemme (60) untergebracht. Im hinteren - also wellennahen - Bereich der radialen Stufenbohrung (25) sitzt das z.B. rotationssymmetrische Druckstück (73). Es liegt am Reibelement (90) an der Rückseite der Reibzone (95) direkt an. Das Druckstück (73) ist ein zylindrischer Kolben mit einer angeformten Kolbenstange. Die Kolbenstange ragt vollständig in die Ringnut (18) hinein, während dies der Kolben nur bereichsweise tut. Am Kolben befindet sich eine Nut, in der ein elastischer Dichtring (74) sitzt. Zwischen dem Grund der Stufenbohrung (25) und dem Kolben ist ggf. ein - hier nicht dargestellter - Rückhubring angeordnet.

Im vorderen Bereich der Stufenbohrung (25), einem Gewindeabschnitt, sitzt verstellbar eine Einstellschraube (75). Die Einstellschraube (75) ist eine zylindrische Scheibe, die an der äußeren Stirnfläche Bohrungen für den Eingriff eines Zapfenschlüssels aufweist. Sie hat ein Außengewinde, das in einer Ringnut endet. In der Ringnut ist ein Quetschring (76) als Schraubensicherung und eine Druckluftdichtung eingelassen.

In der Sacklochbohrung (27) sitzt der Käfig (81), der zwei Zylinderrollen (84, 85) lagert. Beide Zylinderrollen (84, 85) liegen an dem Schiebekeil (66) eines Schiebekeilgetriebes (61) an. Die außen liegende Zylinderrolle (85) stützt sich an der Einstellschraube (75) ab, während die innen liegende Zylinderrolle (84) an dem Druckstück (73) anliegt. Letzteres hat nur beispielhaft einen Durchmesser von 21 mm. Er kann auch viele Millimeter kleiner gewählt werden.

Zwischen dem Druckstück (73) und der Einstellschraube (75) ist ein Kolben (63), umgeben von einem Käfig (81), angeordnet. Der Kolben (63), er hat hier eine Durchmesser von 28 mm, ist nach Figur 3 im oberen Bereich der Sacklochbohrung (27) geführt. Dieser Sacklochbereich bildet zusammen mit dem die Sacklochbohrung (27) verschließenden Deckel (50) den Zylinder einer antreibenden Zylinder-Kolben-Einheit. Eine Kolbendichtung (65) trennt die Kolbenbodenseite von der Kolbenstangenseite (64). Der abgeschlossene, durch die Bohrungen (25) und (27) gebildete, unterhalb der Kolbenstangenseite (64) gelegene Hohlraum bildet den Zylinder einer rückstellenden, pneumatischen Zylinder-Kolben-Einheit.

Im Kolben (63) befindet sich eine zentrale Ausnehmung (69), z.B. in Form einer Sacklochbohrung, in der im Ausführungsbeispiel zwei Federelemente (71, 72), z.B. zwei Schraubendruckfedern, angeordnet sind. Anstelle der Schraubendruckfedern können Tellerfedern, Tellerfederpakete, Blattfedern, Gummifedern, Gasfedern und dergleichen verwendet werden.

Die Schraubendruckfedern (71, 72), die ggf. unterschiedliche Wickelrichtungen haben, liegen nach Figur 3 über ein Federführelement (56) am Deckel (50) an. Das z.B. einteilige Federführelement (56) besteht aus einem Stützteller (57) und einem angeformten Zapfen (58). Der Zapfen (58) steckt mit geringem Spiel im inneren Federelement (72). Am Stützteller (57) liegen die oberen Enden der Federelemente (71, 72) an. Durch das Einsetzen des Federführelements (56) kann bei der Montage der Deckel (50) auf den Grundkörper (11) geschraubt werden, ohne dass die letzten Windungen der Federelemente (71, 72) unbeabsichtigt in die zwischen dem Deckel (50) und dem Grundkörper (11) gelegenen Montagefuge gelangen können.

Der Kolben (63) hat anstelle einer Kolbenstange einen z.B. angeformten Schiebekeil (66) in Form eines bereichsweise hohlen Zylinders, der an zwei einander gegenüberliegenden Seiten abgeflacht ist, vgl. Figuren 6 und 7. Der Schiebekeil (66) hat u.a. eine Stütz- (68) und eine Keilfläche (67). Beide Flächen sind viereckig und z.B. plan. Die jeweils dem Druckstück (73) zugewandte Keilfläche (67) schließt mit diesem z.B. einen spitzen Winkel von 1 bis 5 Winkelgraden ein. Die Stützfläche (68) verläuft parallel zur Stirnfläche der benachbarten Einstellschraube (75). Beispielsweise verjüngen sich die Querschnitte des Schiebekeils (66) linear mit zunehmendem Abstand weg von der Kolbenstangenseite (64) des Kolbens (63).

Der den Schiebekeil (66) umgebende Käfig (81), er wird quer zur Stufenbohrung (25) in die Sacklochbohrung (27) eingesetzt, hat primär die Form eines Rohres mit zwei querliegenden Schlitzen (82) und mehreren abgespreizten Anschlaglippen (83). Die querliegenden Schlitze (82) dienen jeweils der Aufnahme einer Zylinderrolle (84, 85). Die Anschlaglippen (83) sind elastisch nach außen federnde Zungen, die sich ausstellen, sobald der Käfig (81) so tief in die Sacklochbohrung (27) eingeschoben ist, dass die Anschlaglippen (83) im Bereich der Stufenbohrung (27) auffedernd freikommen.

In der unteren Stirnfläche des Käfigs (81) sind z.B. zwei Sacklochbohrungen angeordnet, in denen jeweils z.B. eine Schraubendruckfeder (88) zur Rückholung des Käfigs (81) eingesetzt sind. Nach Figur 3 drücken die Rückholfedern (88) den Käfig (81) nach oben. Liegt der Kolben (63) am Deckel (50) an, so stützt sich der Käfig (81) über die Anschlaglippen (83) an der Wandung der radialen Stufenbohrung (27) ab, vgl. Figur 3, rechte Figurenseite.

Während des Normalbetriebes des die Vorrichtung tragenden Maschinenteils (5) wird der untere im Grundkörper (11) liegende Luftführkanal (31) mit Druckluft versorgt, vgl. Figur 3 und 4. Der Kolben (63) wird gegen die Wirkung der Federelemente (71, 72) oben an den Deckel (50) gepresst und der Käfig (81) befindet sich in seiner oberen Position, vgl. Figur 3, rechte Seite. Die Zylinderrollen (84, 85) sitzen unbelastet im Käfig (81).Die Reibelemente (90-93) kontaktieren nicht die Welle (1). Letztere kann ungehindert rotieren oder sich in Längsrichtung relativ zum Gehäuse (10) bewegen.

Fällt nun im unteren Luftführkanal (31) die Druckluft ab, unabhängig davon, ob eine Systemstörung vorliegt, ein Bremsvorgang eingeleitet werden soll oder ob nur die Welle (1) festgeklemmt werden soll, schieben die jeweiligen Schraubendruckfedern (71, 72) den Schiebekeil (66) nach unten, vgl. Figur 3 linke Seite.

Im Bereich der Sacklochbohrung (27) legen sich mit zunehmendem Schiebekeilhub die Flächen (67, 68) an den im Käfig (81) geführten Zylinderrollen (84, 85) spielfrei an. Die außen liegende Zylinderrolle (85) stützt den Schiebekeil (66) an der Einstellschraube (75) ab, während die innen liegende Zylinderrolle (84) das Druckstück (73) gegen den Widerstand des Reibelements (90) auf die Welle (1) zuschiebt. Die Zylinderrollen (84, 85) wälzen nun zwischen den Bauteilen (73, 66, 75) so lange ab, bis sich im Ausführungsbeispiel ein Kräftegleichgewicht zwischen der Federkraft des Gehäuses (10) und der Federkraft der Federelemente (71, 72) eingestellt hat. Dann haben die Reibgehemme (60) - bei reiner Federkraftwirkung - ihre maximale Klemmkraft erreicht. Die Reibelemente (90-93) liegen über die Reibzonen (95) an der Welle (1) an. Das Bremsmoment beträgt bei der vorliegenden Ausführungsvariante 200 ± 50 Nm.

Über den oberen Luftführkanal (53) kann zusätzlich die Kolbenbodenseite (32) des Kolbens (63) mit Druckluft beaufschlagt werden. In diesem Fall erhöht sich das Bremsmoment auf 400 ± 100 Nm bei einem Luftdruck von 4 x 10⁵ Pa.

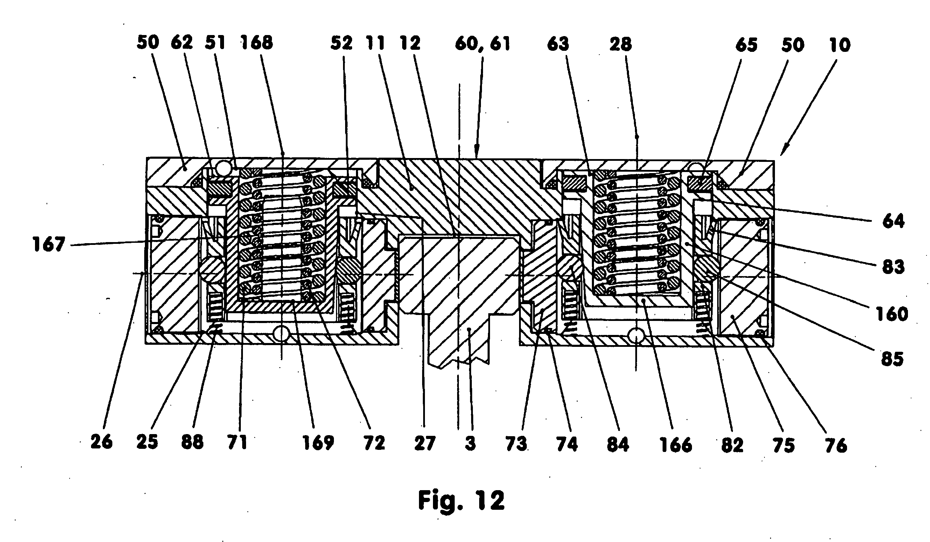

Die Figur 12 zeigt eine Brems- und/oder Klemmvorrichtung, wie sie beispielsweise in vielen Horizontal- oder Vertikalschlitten u.a. in Werkzeug- und Messmaschinen verwendet wird. Die Vorrichtung der vorliegenden Ausführungsform sind hierbei am entsprechenden Geräteschlitten so angeordnet, dass sie die - die Schlittenlängsführung vorgebende - Führungsschiene (3) mit jeweils zwei Reibgehemmen (60) umgreift.

Die Führungsschiene (3) wird von einem Grundkörper (11) beidseitig umgriffen. Im Grundkörper (11) sind zwei gegeneinander Brems- und Klemmkräfte erzeugende Vorrichtungen integriert. Der im Prinzip c-förmige Grundkörper (11) besteht aus einem Quader, der quer zu seiner Längsausdehnung eine Umgriffsnut (22) aufweist, die z.B. einen rechteckförmigen Querschnitt hat. In dem durch die Umgriffsnut (22) entstandenen Freiraum ist die Führungsschiene (3) platziert. Die Ümgriffsnutbreite ist nur geringfügig breiter als die Führungsschienenbreite in dem vom Grundkörper (11) umgriffenen Bereich. Jede Gehäusehälfte hat einen Deckel (50), der die Sacklochbohrungen (27) gasdicht verschließt.

Auch hier wird das einzelne Schiebekeilgetriebe (61) u.a. durch Federelemente (71, 72) zum Halten der Klemmkräfte des jeweiligen Reibgehemmes (60) belastet. Zum Entlasten wird z.B. Druckluft verwendet. Dazu ist der Schiebekeil (66) als Teil einer Kombination aus dem Kolben (63) und einer Kolbenstange (160) ausgebildet. Die Kolbenstange (160) ist hier nicht in einer herkömmlichen, gasdicht abgedichteten Bohrung geführt, sondern sitzt - z.B. zweiseitig abgeflacht - zwischen zwei Zylinderrollen (84) und (85). Die eine Abflachung ist eine Schiebkeilflanke (67), die andere eine Stützflanke (68), vgl. hierzu auch Figuren 3, 6 und 7.

Die Kombination aus Kolben (63) und Kolbenstange (160) hat eine z.B. zylindrische Ausnehmung (69). Die Ausnehmung hat einen planen Bohrungsgrund (169), der normal zur kolbeneigenen Mittellinie (168) ausgerichtet ist. Der Boden (166) der Kolbenstange (160) hat beispielsweise eine Wandstärke von 2 mm.

Die Federelemente (71, 72), hier wiederum zwei Schraubendruckfedern, sind in der Ausnehmung (69) ineinandergeschachtelt und somit bezüglich der Federrate parallel geschaltet positioniert. Sie sitzen - bei geringem Bauraumbedarf - auf dem Bohrungsgrund (169) der Ausnehmung (69) auf und stützen sich zugleich an der Bodenfläche (52) des jeweiligen Deckels (50) ab. Ggf. wird die innen liegende Schraubendruckfeder (72) an einem zentralen Führungszapfen (167) geführt. Letzterer verkürzt zudem durch seine Volumenverringerung der Ausnehmung (69) die Ansprechzeit der Vorrichtung, wenn zum Klemmen zusätzlich die Kolbenbodenseite (62) des Kolbens (63) mit Druckluft belastet wird. Der Führungszapfen (167) kann auch jeweils am Deckel (50) angeordnet oder angeformt sein.

Um bei der Verwendung ineinander geschachtelter Schraubendruckfedern unterschiedlich lange Federn verwenden zu können, kann die Ausnehmung (69) auch als Stufenbohrung gestaltet sein, so dass z.B. die außen liegende Schraubendruckfeder (71) eine kürzere Federlänge hat.

Ggf. kann in der Ausnehmung auch ein System von Tellerfedern angeordnet sein. Die Tellerfedern sind dazu z.B. in Mischschaltung - also zum Teil gleichsinnig und zum Teil wechselweise gestapelt - angeordnet.

### Bezugszeichenliste:

- 1: Welle
- 2: Mittellinie, Führungslängsrichtung
- 3: Führungschiene
- 5: Maschinenteil

- 10: Gehäuse
- 11: Grundkörper
- 12: Unterseite
- 13: Oberseite
- 14: Außenwandung
- 15: Bohrung, zentral, für (1)
- 16: Bohrungswandung
- 17: Steg
- 18: Ringnut in (15)
- 19: Durchgangsbohrungen für (21)

- 21: Federstifte, Kerbstifte, Zylinderstifte
- 22^: Umgriffsnut
- 23: Ringkanal in (12)
- 24: Grund des (23)
- 25: Stufenbohrung, horizontal, radial
- 26: Mittellinie
- 27: Sacklochbohrung, vertikal
- 28: Mittellinie

- 31: Luftführkanal, unten
- 32: Bohrung
- 33: Gehäusebund, innen
- 34: Feingewinde

- 35: Gehäusebund, außen
- 36: Gewindebohrungen
- 37: Durchgangsbohrungen

- 39: Bohrung
- 41: Luftanschluss, oben
- 42: Luftanschluss, unten

- 43: Dichtring, außen
- 44: Dichtring, innen
- 45: Ringscheibe
- 46: Ringkanal für (93)
- 47: Ringkanalgrund von (46)
- 48: Absatz an (11)
- 49: Stopfen

- 50: Deckel
- 51: Eindrehung
- 52: Bodenfläche
- 53: Luftführkanal, oben
- 54: Durchgangsbohrungen
- 55: Schrauben für (50)
- 56: Federführelement
- 57: Stützteller
- 58: Zapfen
- 59: Gehäuse, quaderförmig

- 60: Reibgehemme
- 61: Schiebekeilgetriebe
- 62: Kolbenbodenseite
- 63: Kolben
- 64: Kolbenstangenseite
- 65: Kolbendichtung
- 66: Schiebekeil, Schiebekeilflanke
- 67: Keilfläche
- 68: Stützfläche, Stützflanke

- 69: Ausnehmung, Sacklochbohrung
- 71: Federelement, Schraubendruckfeder, außen
- 72: Federelement, Schraubendruckfeder, innen

- 73: Druckstück
- 74: Dichtring
- 75: Einstellschraube
- 76: Quetschring

- 81: Käfig
- 82: Schlitze
- 83: Anschlaglippen
- 84: Zylinderrolle, innen
- 85: Zylinderrolle, außen
- 88: Rückholfedern, Schraubendruckfedern

- 90: Reibelement, knochenförmig
- 91: Reibelement, halbseitig geklemmt
- 92: Reibelement, halbseitig, herauserodiert
- 93: Reibelement, halbseitig, herausgedreht

- 94: Biegeelement
- 95: Reibzone
- 96: Flächenschwerpunkte

- 97: Befestigungsaugen
- 98: Bohrungen
- 99: Bolzen

- 160: Kolbenstange
- 166: Boden von (160)
- 167: Führungszapfen
- 168: Mittellinie von (63)
- 169: Bohrungsgrund von (69)

## Patentansprüche

1. Brems- und/oder Klemmvorrichtung zum Bremsen oder Klemmen einer Führungsschiene (3) und/oder einer Welle (1) gegenüber einem Gehäuse (10),
- wobei die Vorrichtung mindestens drei über ein Schiebekeilgetriebe (61) betätigbare Reibgehemme (60) umfasst,
- wobei das einzelne Schiebekeilgetriebe (61) zur Belastung des Reibgehemmes (60) mittels Federkraft und/oder Druckluftkraft in eine Richtung und zur Entlastung mittels Druckkraft in die entgegengesetzte Richtung bewegt wird,
- dass das einzelne Schiebekeilgetriebe (61) einen Kolben (63) einer Zylinder-Kolben-Einheit aufweist, dessen Kolbenstange (160) mindestens eine Schiebekeilflanke (67) hat,
**dadurch gekennzeichnet,**
- **dass** der Kolben (63) und die Kolbenstange (160) aus einem Stück gefertigt sind,
- **dass** die Kombination aus dem Kolben (63) und aus der Kolbenstange (160) eine zusammenhängende Ausnehmung (69) mit einem planen Bohrungsgrund (169) aufweist,
- **dass** zentral auf dem Bohrungsgrund (169) der Ausnehmung (69) ein Führungszapfen (167) angeordnet ist und
- **dass** in der Ausnehmung (69) mindestens ein Federelement (71, 72) oder ein System aus Federelementen angeordnet ist.

2. Vorrichtung gemäß Anspruch 1, **dadurch gekennzeichnet, dass** die Kolbenstange (160) eine Schiebekeilflanke (67) aufweist.

3. Vorrichtung gemäß Anspruch 2, **dadurch gekennzeichnet, dass** die Kolbenstange (66) auf der der Schiebekeilflanke (67) abgelegenen Seite eine Stützflanke (68) aufweist.

4. Vorrichtung gemäß Anspruch 1, **dadurch gekennzeichnet, dass** die Ausnehmung (69) eine zylindrische Bohrung ist.

5. Vorrichtung gemäß Anspruch 1, **dadurch gekennzeichnet, dass** der Bohrungsgrund (169) der Ausnehmung (69) normal zur Mittellinie (168) des Kolbens (63) ausgerichtet ist.

6. Vorrichtung gemäß Anspruch 1, **dadurch gekennzeichnet, dass** in der Ausnehmung (69) als Federelemente zwei Schraubendruckfedern (71, 72) angeordnet sind, wobei die Wicklung des einen Federelements rechtssteigend und die Wicklung des anderen Federelements linkssteigend gewickelt ist.

7. Vorrichtung gemäß Anspruch 1, **dadurch gekennzeichnet, dass** das Federelement (71, 72) in Längsrichtung des Kolbens (63) wirkt.

## Claims

1. Braking and/or clamping apparatus for braking or clamping a guide rail (3) and/or a shaft (1) against a casing (10),
- wherein said apparatus comprises at least three frictional retarding mechanisms (60) adapted to be actuated each through a sliding-wedge transmission (61);
- said individual sliding-wedge transmissions (61) is actuatable by spring force and/or pressurized-air force to move in one direction for loading said frictional retarding mechanism and to move in the opposite direction by means of compressive force for relief; and
- each said sliding-wedge transmission (61) comprises a piston (63) of a cylinder-piston unit of which the piston rod (160) has at least one sliding-wedge surface (67);
**characterized in that**
- piston (63) and piston rod (160) are formed to be integral;
- the combination comprising piston (63) and piston rod (160) has therein a coherent bored recess (69), the bottom surface (169) of said bored recess being planar;
- a guide peg (167) is provided centrally on bore bottom (169) of recess (69); and
- recess (69) has placed therein at least one spring element (71, 72) or a system of spring elements.

2. Apparatus as claimed in claim 1, **characterized in that** piston rod (160) has a sliding-wedge surface (67) thereon.

3. Apparatus as claimed in claim 2, **characterized in that** piston rod (66) has a support surface (68) on the side opposite sliding-wedge surface (67).

4. Apparatus as claimed in claim 1, **characterized in that** recess (69) is a cylindrical bore.

5. Apparatus as claimed in claim 1, **characterized in that** bore bottom (169) of recess (69) is oriented to be normal to centerline (168) of piston (63).

6. Apparatus as claimed in claim 1, **characterized in that** recess (69) has therein for spring elements a pair of helical compression springs (71, 72), with one said spring element wound to be right-handed and the other spring element wound to be left-handed.

7. Apparatus as claimed in claim 1, **characterized in that** spring element (71, 72) act in the longitudinal direction of piston (63).

## Revendications

1. Dispositif de freinage et/ou de serrage destiné à freiner ou à serrer un rail de guidage (3) et/ou un arbre (1) dans un carter (10) où
- le dispositif comprend au moins trois patins à friction (60) qui peuvent être actionnés par un engrenage à clavette coulissante (61),
- chaque engrenage à clavette coulissante (61) est déplacé dans une direction, pour charger le patin à friction (60) grâce à la force de tension d'un ressort et/ou par air comprimé, et est déplacé dans la direction opposée, pour relâcher cette tension, grâce à un effort de pression,
- chaque engrenage à clavette coulissante (61) présente un piston (63) d'une unité cylindre-piston dont la tige de piston (160) a au moins un flanc en coin (67), **caractérisé en ce**
- **que** le piston (63) et la tige du piston (160) sont réalisés d'une seule pièce
- **que** la combinaison du piston (63) et de la tige de piston (160) présente un évidement continu (69) avec un fond de perçage plan (169)
- **qu'**un tourillon de guidage (167) est placé sur le fond de perçage (169) de l'évidement (69) et
- **qu'**au moins un élément élastique (71, 72) ou un système composé de plusieurs éléments élastiques est placé dans l'évidement (69).

2. Dispositif selon la revendication 1, **caractérisé en ce que** la tige du piston (160) présente un flanc en coin (67) d'une clavette coulissante.

3. Dispositif selon la revendication 2, **caractérisé en ce que** la tige du piston (66) présente un flanc d'appui (68) du côté opposé au flanc en coin (67).

4. Dispositif selon la revendication 1, **caractérisé en ce que** l'évidement (69) est un alésage cylindrique.

5. Dispositif selon la revendication 1, **caractérisé en ce que** le fond de perçage (169) de l'évidement (69) est disposé normalement par rapport à la ligne médiane (168) du piston (63).

6. Dispositif selon la revendication 1, **caractérisé en ce que** deux ressorts hélicoïdaux de compression (71, 72) sont disposés dans l'évidement (69) comme éléments élastiques, l'enroulement de l'un des éléments élastiques étant formé avec pas à droite et l'enroulement de l'autre élément élastique étant formé avec pas à gauche.

7. Dispositif selon la revendication 1, **caractérisé en ce que** l'élément ressort (71, 72) agit dans le sens longitudinal du piston (63).
